# EUROPEAN PATENT SPECIFICATION

(11) **EP 3 609 153 B1**
(45) Date of publication and mention of the grant of the patent: **03.11.2021**
(21) Application number: 18785798.2
(22) Date of filing: 30.05.2018
(51) Int. Cl.: H04L 29/06, H04L 12/24, G06Q 10/00, G06Q 30/06, H04L 29/08

(54) **MAINTENANCE EQUIPMENT MANAGEMENT METHOD, SERVER AND COMPUTER-READABLE STORAGE MEDIUM**
VERWALTUNGSVERFAHREN FÜR EINE WARTUNGSVORRICHTUNG UND SERVER SOWIE COMPUTERLESBARES SPEICHERMEDIUM
PROCÉDÉ DE GESTION D'ÉQUIPEMENT DE MAINTENANCE, SERVEUR ET SUPPORT D'INFORMATIONS LISIBLE PAR ORDINATEUR

(43) Date of publication of application: 12.02.2020
(73) Proprietor: Launch Tech Co., Ltd, Longgang District Shenzhen Guangdong 518129 (CN)
(72) Inventor: LIU, Jun, Longgang District Shenzen, Guangdong 518129 (CN); MAI, Xueying, Longgang District Shenzen, Guangdong 518129 (CN)
(74) Representative: AWA Sweden AB
(86) International application number: PCT/CN2018/088951
(87) International publication number: WO 2019/227320

(56) References cited:
- CN-A- 101 674 314
- CN-A- 103 078 855
- CN-A- 103 916 395
- CN-A- 103 916 395
- US-A1- 2004 093 595
- US-A1- 2008 166 993
- US-A1- 2009 112 397
- US-A1- 2014 330 720

## Description

### TECHNICAL FIELD

The present disclosure relates to the field of maintenance service technologies, and more particularly to maintenance device management method and server, and computer readable storage medium.

### BACKGROUND

In the prior art, maintenance devices are required to be purchased by maintenance shops and then are used. And necessary device investment must be made before the maintenance business is carried out. Some devices are expensive in the market, and the investment cost is high for the technicians, which leads to low use efficiency of maintenance device.

Therefore, how to improve the use efficiency of the maintenance device is a problem to be solved by those skilled in the art.

A software application framework for network-connected devices is known from US2004093595A1. A method and system for mobile device activation is known from US2008166993A1. A method, device and system for service calling is known from CN103916395A. A system to utilize telecommunications data to authorize and activate equipment is known from US2014330720A1. A software and method for updating a scan tool with limited memory is known from US 2009/0112397 A1.

### SUMMARY

The present invention is defined by the subject-matter of the independent claims. Further details are defined in the dependent claims.

The object of the present disclosure is to provide maintenance device management method and server, and computer readable storage medium, which improve the use efficiency of the maintenance device.

In order to achieve the above object, a first aspect of the present disclosure provides a maintenance device management method, comprising:
receiving information of maintenance device sent by a client;
returning a service rule for a maintenance device to the client according to the information of maintenance device;
receiving a service request sent by the client, wherein the service request includes a service item; and
controlling the turn-on and turn-off of the maintenance device according to the service item.

Combined with the first aspect of the present disclosure, in a first possible implementation manner of the first aspect of the present disclosure, after receiving a service request sent by the client and before controlling the turn-on and turn-off of the maintenance device according to the service item, the method further comprises:
determining a deposit of using the maintenance device according to the information of maintenance device;
initiating a deposit payment transaction request to the client; and
controlling the turn-on of the maintenance device after the client completes the deposit payment transaction.

Combined with the first possible implementation manner of the first aspect of the present disclosure, in a second possible implementation manner of the first aspect of the present disclosure, the service item comprises a service duration, and controlling the turn-on and turn-off of the maintenance device according to the service item comprises:
controlling the turn-on of the maintenance device after the client completes the deposit payment transaction; and
controlling the turn-off of the maintenance device when a duration of using the maintenance device reaches the service duration.

Combined with the first possible implementation manner of the first aspect of the present disclosure, in a third possible implementation manner of the first aspect of the present disclosure, the service item comprises a service category, and controlling the turn-on and turn-off of the maintenance device according to the service item comprises:
controlling the turn-on of the maintenance device after the client completes the deposit payment transaction;
receiving a request for ending the usage sent by the client when a user completes the service corresponding to the service category; and
controlling the turn-off of the maintenance device according to the request for ending the usage.

Combined with the first aspect of the present disclosure, the first possible implementation manner of the first aspect of the present disclosure, the second possible implementation manner of the first aspect of the present disclosure, or the third possible implementation manner of the first aspect of the present disclosure, in a fourth possible implementation manner of the first aspect of the present disclosure, the method further comprises:
generating a list of services and a list of charges according to the service item; and
initiating a payment transaction request to the client according to the list of services and the list of charges so as to cause the client to complete the payment transaction.

Combined with the fourth possible implementation manner of the first aspect of the present disclosure, in a fifth possible implementation manner of the first aspect of the present disclosure, after controlling the turn-off of the maintenance device, the method further comprises:
acquiring current status information of the maintenance device;
determining whether the state of the maintenance device is normal according to the current state information;
generating a list of additional charges according to the current state information in the case that the state of the maintenance device is abnormal; and
initiating a transaction request for paying additional charge to the client according to the list of additional charges so as to cause the client to complete a transaction for paying additional charge.

In order to achieve the above object, a second aspect of the present disclosure provides a maintenance device management server, comprising:
a memory storing an executable computer program;
a processor coupled to the memory;
wherein the processor is configured to execute the computer program to implement: receiving information of maintenance device sent by a client, returning a service rule for a maintenance device to the client according to the information of maintenance device; receiving a service request sent by the client, wherein the service request includes a service item; and a step of controlling the turn-on and turn-off of the maintenance device according to the service item.

Combined with the second aspect of the present disclosure, in a first possible implementation manner of the second aspect of the present disclosure, the processor is configured to execute the computer program stored in the memory to implement: determining a deposit of using the maintenance device according to the information of maintenance device; initiating a deposit payment transaction request to the client; and a step of controlling the turn-on of the maintenance device after the client completes the deposit payment transaction.

Combined with the first possible implementation manner of the second aspect of the present disclosure, in a second possible implementation manner of the second aspect of the present disclosure, the service item comprises a service duration and the processor is configured to execute the computer program stored in the memory to implement: controlling the turn-on of the maintenance device after the client completes the deposit payment transaction; and a step of controlling the turn-off of the maintenance device when a duration of using the maintenance device reaches the service duration.

Combined with the first possible implementation manner of the second aspect of the present disclosure, in a third possible implementation manner of the second aspect of the present disclosure, the service item comprises a service category and the processor is configured to execute the computer program stored in said memory to implement: controlling the turn-on of the maintenance device after the client completes the deposit payment transaction; receiving a request for ending the usage sent by the client when a user completes the service corresponding to the service category; and a step of controlling the turn-off of the maintenance device according to the request for ending the usage.

Combined with the second aspect of the present disclosure, the first possible implementation manner of the second aspect of the present disclosure, the second possible implementation manner of the second aspect of the present disclosure, or the third possible implementation manner of the second aspect of the present disclosure, in a fourth possible implementation manner of the second aspect of the present disclosure, the processor is configured to execute the computer program stored in the memory to implement: generating a list of services and a list of charges according to the service item; and a step of initiating a payment transaction request to the client according to the list of services and the list of charges so as to cause the client to complete the payment transaction.

Combined with the fourth possible implementation manner of the second aspect of the present disclosure, in a fifth possible implementation manner of the second aspect of the present disclosure, the processor is configured to execute the computer program stored in the memory to implement: acquiring current status information of the maintenance device; determining whether the state of the maintenance device is normal according to the current state information; generating a list of additional charges according to the current state information in the case that the state of the maintenance device is abnormal; and a step of initiating a transaction request for paying additional charge to the client according to the list of additional charges so as to cause the client to complete a transaction for paying additional charge.

In order to achieve the above object, a third aspect of the present disclosure provides a computer readable storage medium, wherein the computer readable storage medium has a computer program stored therein, and when the computer program is executed by a processor the steps of the first aspect and any one of the possible implementation manners of the first aspect are performed.

According to the above solutions, a maintenance device management method provided by the present disclosure comprises: receiving information of maintenance device sent by a client; returning a service rule for a maintenance device to the client according to the information of maintenance device; receiving a service request sent by the client, where the service request includes a service item; and controlling the turn-on and turn-off of the maintenance device according to the service item.

In the maintenance device management methods provided in the present disclosure, each maintenance device has uniquely determined information of maintenance device. When the user needs to use the maintenance device, it is only required to acquire the service items corresponding to the maintenance device according to the information of maintenance device and make a selection via the client, and the server controls the turn-on and turn-off of the device according to the service item selected by the user so as to provide the user with the service of using the maintenance device. Compared with the solution in the prior art that a purchase is required before the use, the usage cost of the maintenance devices is reduced and the usage efficiency of the maintenance devices is improved. At the same time, different users can use the same maintenance devices and the sharing of maintenance devices is achieved. The present disclosure also discloses a maintenance device management server and a computer readable storage medium, which can also achieve the above technical effects.

### BRIEF DESCRIPTION OF THE DRAWINGS

In order to more clearly illustrate the embodiments of the present disclosure or the technical solutions in the prior art, the accompanying drawings to be used in the description of the embodiments or the prior art will be briefly described below.
FIG. 1 is a flowchart of a maintenance device management method according to an embodiment of the present disclosure;
FIG. 2 is a flowchart of another maintenance device management method according to an embodiment of the present disclosure;

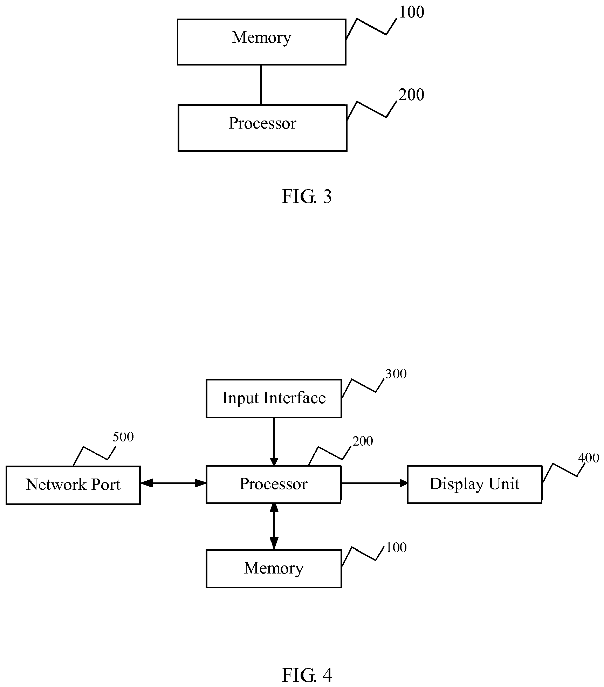

FIG. 3 is a structural diagram of a maintenance device management server according to an embodiment of the present disclosure;
FIG. 4 is a structural diagram of another maintenance device management server according to an embodiment of the present disclosure.

### DETAILED DESCRIPTION OF THE EMBODIMENTS

The technical solutions in the embodiments of the present disclosure will be clearly and completely described with reference to the accompanying drawings in the embodiments of the present disclosure as follows.

The maintenance site management method provided in the present disclosure can be applied to the use of a maintenance device for a vehicle or an electrical device. When the user needs to use the maintenance device, it is only required to acquire the service items corresponding to the maintenance device according to the information of maintenance device and make a selection via the client, and the server controls the turn-on and turn-off of the device according to the service item selected by the user so as to provide the user with the service of using the maintenance device. The usage cost of the maintenance devices is reduced and the usage efficiency of the maintenance devices is improved. At the same time, different users can use the same maintenance devices and the sharing of maintenance devices is achieved.

An embodiment of the present disclosure discloses a maintenance device management method, which improves the usage efficiency of the maintenance devices.

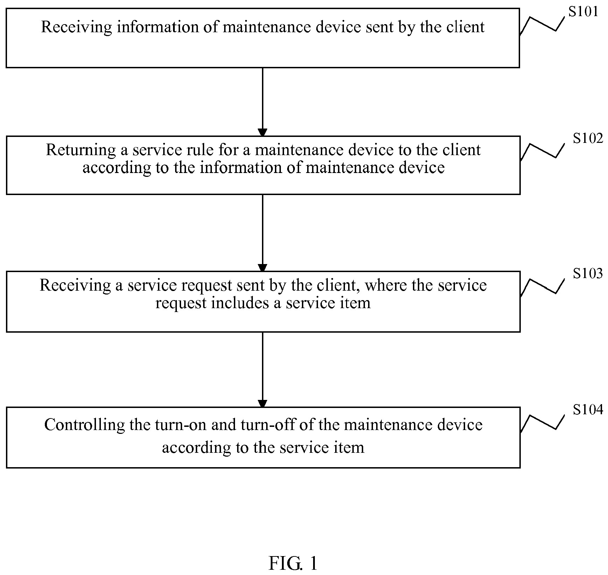

FIG. 1 is a flowchart of a maintenance device management method according to an embodiment of the present disclosure. Referring to FIG. 1, the method includes:
S101: receiving information of maintenance device sent by a client.

In a specific implementation, after the user selects the device to be used, the server acquires the information of maintenance device of the device through a terminal device such as a mobile phone, where the information of maintenance device may include the information indicating the characteristics of the maintenance device, such as identification information like device number, name, location information, or QR code, etc. The specific manner of acquiring the information of maintenance device is not limited herein, and those skilled in the art can flexibly make the selection according to actual conditions. For example, the QR code or other device code on the maintenance device can be scanned through the client by the user and be parsed to obtain the information of maintenance device of the device, and the information of maintenance device is then sent to the server. Of course, the QR code or other device code may be directly sent to the server and be parsed by the server.

S102: returning a service rule for a maintenance device to the client according to the information of maintenance device.

In a specific implementation, after receiving the information of maintenance device, the server queries the database for the service rule corresponding to the information of maintenance device according to the information of maintenance device, and returns the service rule to the terminal device, where the service rule may include the service category, the usage rule, and the allowed duration of usage of the device. For example, the lift allows 30 minutes, 45 minutes, and one hour of usage. It can be understood that by default, the correspondence between the identification information and the service rule exists in the database of the server. The correspondence may be stored in the form of a data table, and of course may be stored in the database in other forms, which is not specifically limited herein.

It should be noted that the device may be used by the user in a free or paid manner. When the user needs to pay, the service rule should also include the usage fee corresponding to each duration of usage. The different duration of usage of each device may correspond to the same usage fee, and may alternatively correspond to the same usage fee, which is not specifically limited herein. Certainly, the same charging standard may be adopted for different devices. Alternatively, different charging standards may be adopted. Those skilled in the art may flexibly make the selection according to actual conditions, which is not specifically limited herein either. In this embodiment, the user can complete online payment through the client and no manual toll collection is required, thereby reducing the labor costs.

S103: receiving a service request sent by the client, wherein the service request includes a service item.

In a specific implementation, after the client receives the above mentioned service rule, the user needs to agree to the usage rule of the device through the client and select a service item, and the client generates a service request according to the service item and send it to the server.

S104: controlling the turn-on and turn-off of the maintenance device according to the service item.

In a specific implementation, after receiving the service request, the server controls the device to start operation to provide a service for the user, when the service item includes a service duration the countdown begins, and when the usage duration of the maintenance device reaches the service duration, the device is controlled to be turned off, that is, the maintenance device is not available for use. It can be understood that, before the countdown is over, the user can also choose to end the usage through the client. When the service item includes the service category, a request for ending the usage from the client is awaited, and the maintenance device is controlled to be turned off according to the request for ending the usage.

In the maintenance device management method provided by the present disclosure, each maintenance device has uniquely determined information of maintenance device. When the user needs to use the maintenance device, it is only required to acquire the service items corresponding to the maintenance device according to the information of maintenance device and make a selection via the client, and the server controls the turn-on and turn-off of the device according to the service item selected by the user so as to provide the user with the service of using the maintenance device. Compared with the solution in the prior art that a purchase is required before the use, the usage cost of the maintenance devices is reduced and the usage efficiency of the maintenance devices is improved. At the same time, different users can use the same maintenance devices and the sharing of maintenance devices is achieved.

An embodiment of the present disclosure discloses a maintenance device management method. Compared with the previous embodiment, the technical solution is further illustrated and optimized in this embodiment. In particular:

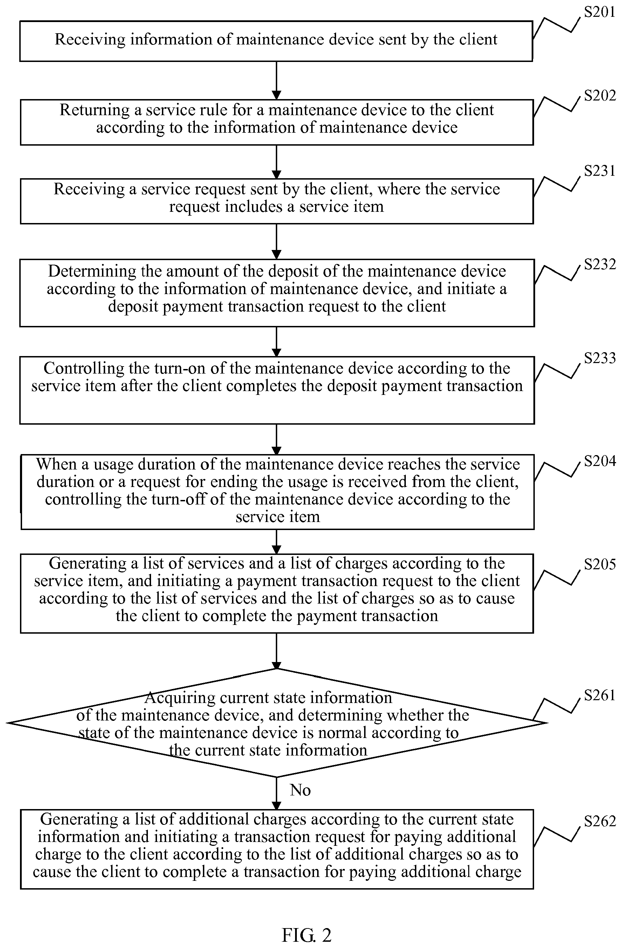

FIG. 2 is a flowchart of another maintenance device management method provided by an embodiment of the present disclosure. Referring to FIG. 2, the method includes:
S201: receiving information of maintenance device sent by the client.
S202: returning a service rule for a maintenance device to the client according to the information of maintenance device.

In this embodiment the specific payment rules for the user will be introduced in detail. It can be understood that when the user needs to pay for the use of the maintenance device, the above mentioned service rule should also include the charging standard corresponding to the maintenance device, that is, the usage fee corresponding to different usage duration or different service category of the maintenance device. When the user needs to pay a deposit, the charging standard should also include the amount of the deposit corresponding to the maintenance device.

As another implementation manner of the user paying the deposit, the server may send the amount of the deposit corresponding to the device selected by the user to the terminal device after receiving the service request of the user, and the user performs online payment through the client after confirming.

S231: receiving a service request sent by the client, where the service request includes a service item.

S232: determining the amount of the deposit of the maintenance device according to the information of maintenance device, and initiate a deposit payment transaction request to the client.

S233: controlling the turn-on of the maintenance device according to the service item after the client completes the deposit payment transaction.

It can be understood that, in order to ensure the user's civilized use of the maintenance device and the normal operation of each maintenance device, as a preferred embodiment, the means of collecting a deposit may be adopted. Specifically, after receiving the service request sent by the client, the server determines the amount of the deposit of the maintenance device according to the information of maintenance device, initiates a deposit payment transaction request to the client, and controls the turn-on of the maintenance device, i.e., the maintenance device is available for use, after the client completes the deposit payment transaction. The user can complete the deposit payment transaction through the common payment means such as online banking and third-party payment on the client, which is not specifically limited herein. As a preferred implementation manner, the deposit payment transaction may be uploaded to the block chain for preservation, that is, the server transmits the deposit payment transaction to the block chain through a node of the block chain, so that other nodes of the block chain synchronize the deposit payment transaction. Due to the decentralized and non-tampering characteristics of the block chain, the security of the deposit payment transaction is assured.

In the above embodiment, by default the database of the server stores the correspondence between each maintenance device and the deposit, and the correspondence may be stored in the database in the form of a data table, and may of course be stored in other forms, which is not specifically limited herein. It can be understood that the deposits corresponding to different usage times or service categories of different maintenance devices may be the same or different and those skilled in the art may flexibly set according to actual conditions.

For the refund of the deposit, the user may send a deposit refund request to the server through the client after using the maintenance device once, or may send the deposit refund request to the server after using the maintenance device multiple times, which is not specifically limited herein. After receiving the deposit refund request, the server queries the amount of the deposit of the user and refunds the deposit according to the payment path of the user.

S204: controlling the turn-off of the maintenance device according to the service item.

In a specific implementation, if the service item is a service duration, when a usage duration of the maintenance device reaches the service duration, the server controls the turn-off of the maintenance device. It can be understood that, when the usage duration does not reach the service duration, the user can also choose to end the usage through the client, that is, send a request for ending the usage to the server, and the server turns off the maintenance device according to the request for ending the usage. If the service item is a service category, when the user completes the service corresponding to the service category, the client sends a request for ending the usage to the server, and the server turns off the maintenance device when receiving the request for ending the usage.

S205: generating a list of services and a list of charges according to the service item, and initiating a payment transaction request to the client according to the list of services and the list of charges so as to cause the client to complete the payment transaction.

It should be noted that the server may generate a list of services and a list of charges after the maintenance device is turned off. Of course, the list of charges may be generated before the maintenance device is turned on, that is, the user must pay the list of charges before using the device. By default, the database of the server stores a correspondence between the service items and the charging standard. Similarly, the correspondence may be stored in the database in the form of a data table, and may of course be stored in other forms, which is not specifically limited herein.

It can be understood that, in order to improve the user experience, the user may be reminded that the usage time is about to time out at a preset time before the end of the countdown of the usage duration. The specific value of the preset time is not limited here. When the countdown ends, the maintenance device is controlled to be turned off. Of course, as a preferred embodiment, when the user uses the scheduled maintenance device for a time period exceeding the usage time, the usage fee corresponding to the time period exceeding the usage time may be counted into the list of charges as described above.

S261: acquiring current state information of the maintenance device, and determining whether the state of the maintenance device is normal according to the current state information. If the state of the maintenance device is normal, the process is ended and if the state of the maintenance device is abnormal, S262 is performed.

S262: generating a list of additional charges according to the current state information and initiating a transaction request for paying additional charge to the client according to the list of additional charges so as to cause the client to complete a transaction for paying additional charge.

In a specific implementation, when the user chooses to end the usage or the countdown is over, the current state information of the maintenance device is collected, and it is determined whether the operation state of the maintenance device is normal. For example, the operation state of the maintenance device can be detected by running monitoring, and the parameter values of the maintenance device can be collected by a voltage collector, a current collector, etc., and it is determined whether the parameter value is within a normal threshold range. For another example, whether the user follows the usage rule of the maintenance device, whether the detachable component of the maintenance device is put back, whether each movable component of the maintenance device is in its initial position (i.e., the position of each movable component before the user uses the maintenance device), and whether the overall cleaning degree of the maintenance device conforms to the standard, etc, are determined through the camera or the infrared device. According to the above determination result, the list of additional charges is generated, that is, when the operation state is normal, the additional charges is zero, and when the operation state is abnormal, the additional charge is the compensation required to restore the maintenance device to normal, and the users may share the maintenance device for vehicles next time only if they pay the additional charges.

As a preferred embodiment, similar to the preservation manner of the deposit payment transaction, the payment transaction for the usage charge and the additional charges may be uploaded to the block chain for preservation. Due to the decentralized and non-tampering characteristics of the block chain, the security of the payment transaction for the usage charge and the additional charges is assured.

An implementation of applying the maintenance device management provided in above embodiments to vehicle maintenance devices will be described below. In particular,
a balancing machine in a tire device has a QR code of the device attached thereon. When the user needs to use the balancing machine, the QR code is scanned by an application program of a mobile phone and sent to the server, the server parses the QR code to acquire the information of maintenance device of the balancing machine, and the server determines the deposit corresponding to the maintenance device according to the information of maintenance device and initiates a deposit payment transaction to the user. When the user completes the deposit payment, the service rule of the maintenance device is returned to the application program, where the service rule here is the allowable usage durations of the balance machine and the usage fees corresponding to each allowed usage durations. After the user selects an usage duration through the application program and agrees to the usage rule of the balancing machine, the server turns on the balancing machine. When the duration of the use reaches the usage duration selected by the user, the server turns off the balancing machine, generates a list of additional charges according to whether the operation state of the maintenance device is normal, and sends it to the application program together with the list of services and the list of charges so that the user can complete the payment transaction through online payment. The user can use other maintenance devices next time only after completing the payment operation. The user may apply for a refund of the deposit after using the balancing machine once and completing the payment transaction, or apply for a refund of the deposit and get the deposit after multiple uses.

An implementation of applying the maintenance device management provided in above embodiments to electrical appliance maintenance devices will be described below. In particular,
the user may select a digital multimeter through an application program of a mobile phone and select a service category of the digital multimeter. After determining the deposit according to the service category of the digital multimeter, the server initiates a deposit payment transaction to the user. After the user pays the deposit, the server returns the charging standard corresponding to the service category to the application program, and after the user confirms, the corresponding service function of the digital multimeter is turned on. The user may end the use through the application program. At this time, the server determines whether the digital multimeter is damaged, whether the multimeter header is in the correct position, etc., and generates a list of additional charges according to the determination result, and sends it to the application program together with the list of services and the list of charges so that the user can complete the payment transaction. The user may apply for a refund of the deposit after using the multimeter once and completing the payment transaction, or apply for a refund of the deposit and get the deposit after multiple uses.

The present disclosure further provides a maintenance device management server. FIG. 5 is a structural diagram of a maintenance device management server according to an embodiment of the present disclosure. Referring to FIG. 5, the maintenance device management server comprises:
a memory 100 storing an executable computer program;
a processor 200 coupled to the memory;

Specifically, the memory 100 includes a nonvolatile storage medium and an internal memory. The non-volatile storage medium stores an operating system and computer readable instructions. The internal memory provides an environment for operation of the operating system and computer readable instructions in the non-volatile storage medium. The processor 200 provides computing and control capabilities to the maintenance device management server and executes the computer program stored in the memory to implement: receiving information of maintenance device sent by a client, returning a service rule for a maintenance device to the client according to the information of maintenance device; receiving a service request sent by the client, wherein the service request includes a service item; and controlling the turn-on and turn-off of the maintenance device according to the service item.

In the maintenance device management server provided by the embodiment of the present disclosure, each maintenance device has uniquely determined information of maintenance device. When the user needs to use the maintenance device, it is only required to acquire the service items corresponding to the maintenance device according to the information of maintenance device and make a selection via the client, and the server controls the turn-on and turn-off of the device according to the service item selected by the user so as to provide the user with the service of using the maintenance device. Compared with the solution in the prior art that a purchase is required before the use, the usage cost of the maintenance devices is reduced and the usage efficiency of the maintenance devices is improved. At the same time, different users can use the same maintenance devices and the sharing of maintenance devices is achieved.

Preferably, when the processor 200 executes the computer program stored in the memory 100, following steps may be implemented: determining a deposit of using the maintenance device according to the information of maintenance device; initiating a deposit payment transaction request to the client; and controlling the turn-on of the maintenance device after the client completes the deposit payment transaction.

Preferably, when the processor 200 executes the computer program stored in the memory 100, the following steps may be implemented: controlling the turn-on of the maintenance device after the client completes the deposit payment transaction; and controlling the turn-off of the maintenance device when a duration of using the maintenance device reaches the service duration.

Preferably, when the processor 200 executes the computer program stored in the memory 100, the following steps may be implemented: controlling the turn-on of the maintenance device after the client completes the deposit payment transaction; receiving a request for ending the usage sent by the client when a user completes the service corresponding to the service category; and controlling the turn-off of the maintenance device according to the request for ending the usage.

Preferably, when the processor 200 executes the computer program stored in the memory 100, the following steps may be implemented: generating a list of services and a list of charges according to the service item; and initiating a payment transaction request to the client according to the list of services and the list of charges so as to cause the client to complete the payment transaction.

Preferably, when the processor 200 executes the computer program stored in the memory 100, the following steps may be implemented: acquiring current status information of the maintenance device; determining whether the state of the maintenance device is normal according to the current state information; generating a list of additional charges according to the current state information in the case that the state of the maintenance device is abnormal; and initiating a transaction request for paying additional charge to the client according to the list of additional charges so as to cause the client to complete a transaction for paying additional charge.

On the basis of the above embodiment, as a preferred embodiment, referring to FIG. 6, the maintenance device management server further includes:
an input interface 300 connected to the processor 200 and configured to acquire an externally imported computer program, parameters and instructions which are stored in the memory 100 under the control of the processor 200, where the input interface 300 can be coupled to an input device to receive the parameters or instructions manually entered by the user, the input device may be a touch layer covered on a display screen, or may be a button, a trackball or a touchpad provided on a terminal casing, or may be a keyboard, a touchpad or a mouse, etc, and specifically, in the embodiment, the service rules and the like corresponding to each device are input through the input interface 300;
a display unit 400 connected to the processor 200 and configured to display the data sent by the processor 200, where the display unit 400 can be a display screen on a PC or a mobile phone, a liquid crystal display or an electronic ink display screen or the like, and specifically, in this embodiment, the display unit 400 can display service rules corresponding to each device, usage information and current state information of each device, consumption information of each client, and the like; and
a network port 500 connected to the processor 200 and configured to make communication connection with external terminal devices, where the communication technology used in the communication connection may be wired communication technology or wireless communication technology, such as mobile high-definition link technology (MHL), universal serial bus (USB), high-definition multimedia interface (HDMI), wireless fidelity technology (WiFi), bluetooth communication technology, low-power bluetooth communication technology, communication technology based on IEEE802.11s, etc. and specifically, in this embodiment, an attachment of each device corresponding to the service rules, and the like may be imported to the processor 200 through the network port 500.

The present disclosure further provides a computer readable storage medium which may include various medium that can store program code such as a USB flash drive, a mobile hard disk, a read-only memory (ROM), a random access memory (RAM), and a magnetic disk or compact disc, etc. The storage medium has a computer program stored therein, and when the computer program is executed by a processor the following steps are implemented: receiving information of maintenance device sent by a client; returning a service rule for a maintenance device to the client according to the information of maintenance device; receiving a service request sent by the client, wherein the service request includes a service item; and controlling the turn-on and turn-off of the maintenance device according to the service item.

In this embodiment of the present disclosure, each maintenance device has uniquely determined information of maintenance device. When the user needs to use the maintenance device, it is only required to acquire the service items corresponding to the maintenance device according to the information of maintenance device and make a selection via the client, and the server controls the turn-on and turn-off of the device according to the service item selected by the user so as to provide the user with the service of using the maintenance device. Compared with the solution in the prior art that a purchase is required before the use, the usage cost of the maintenance devices is reduced and the usage efficiency of the maintenance devices is improved. At the same time, different users can use the same maintenance devices and the sharing of maintenance devices is achieved.

Preferably, when the computer program stored in the computer readable storage medium is executed by a processor the following steps may be in particular implemented: determining a deposit of using the maintenance device according to the information of maintenance device; initiating a deposit payment transaction request to the client; and controlling the turn-on of the maintenance device after the client completes the deposit payment transaction.

Preferably, when the computer program stored in the computer readable storage medium is executed by a processor the following steps may be in particular implemented: controlling the turn-on of the maintenance device after the client completes the deposit payment transaction; and controlling the turn-off of the maintenance device when a duration of using the maintenance device reaches the service duration.

Preferably, when the computer program stored in the computer readable storage medium is executed by a processor the following steps may be in particular implemented: controlling the turn-on of the maintenance device after the client completes the deposit payment transaction; receiving a request for ending the usage sent by the client when a user completes the service corresponding to the service category; and controlling the turn-off of the maintenance device according to the request for ending the usage.

Preferably, when the computer program stored in the computer readable storage medium is executed by a processor the following steps may be in particular implemented: generating a list of services and a list of charges according to the service item; and initiating a payment transaction request to the client according to the list of services and the list of charges so as to cause the client to complete the payment transaction.

Preferably, when the computer program stored in the computer readable storage medium is executed by a processor the following steps may be in particular implemented: acquiring current status information of the maintenance device; determining whether the state of the maintenance device is normal according to the current state information; generating a list of additional charges according to the current state information in the case that the state of the maintenance device is abnormal; and initiating a transaction request for paying additional charge to the client according to the list of additional charges so as to cause the client to complete a transaction for paying additional charge.

The various embodiments in the present specification are described in a progressive manner, and each embodiment focuses on differences from other embodiments, and the same or similar parts between the various embodiments may be referred to each other.

The above description of the disclosed embodiments enables those skilled in the art to make or use the present disclosure. Various modifications to these embodiments are obvious to those skilled in the art, and the general principles defined herein may be implemented in other embodiments without departing from the scope of the subject-matter of the claims.

The various embodiments in the specification are described in a progressive manner, and each embodiment focuses on differences from other embodiments, and the same or similar parts between the various embodiments may be referred to each other. For the system disclosed in the embodiments, since it corresponds to the method disclosed in the embodiment, the description is relatively simple, and the relevant parts can be referred to the description for the method part.

It should also be noted that in the present specification, relational terms such as first and second, etc. are used merely to distinguish one entity or operation from another entity or operation, and do not necessarily require or imply there is any such actual relationship or order between these entities or operations. Furthermore, the term "comprise" or "include" or any other variants thereof is intended to encompass a non-exclusive inclusion, such that a process, method, article, or device that comprises a plurality of elements not only includes those elements but also includes other elements not explicitly listed, or also includes the elements that are inherent to such a process, method, article, or device.

## Claims

1. A method performed by a maintenance device management server for managing maintenance devices, the maintenance devices being configured for maintaining vehicles or electrical devices, with each maintenance device having uniquely determined maintenance device information that includes identification information, the identification information comprising a QR code or other device code and configured to be scanned by a client, wherein the client comprises a terminal device, the method comprising:
receiving (S101, S201) maintenance device information sent by the client;
returning (S102, S202) a service rule for the maintenance device to the client according to the maintenance device information, wherein the service rule comprises a usage rule, and service categories or allowed service durations;
receiving (S103, S231) a service request sent by the client, wherein the service request includes a service item selected from the service categories or the allowed service durations; and
controlling (S104) the turn-on and turn-off of the maintenance device according to the service item, wherein the maintenance device is turned on, and subsequently the maintenance device is turned off when a duration of using the maintenance device reaches a selected service duration or a request for ending the usage is received from the client.

2. The maintenance device management method according to claim 1, wherein after receiving (S231) a service request sent by the client and before controlling (S104) the turn-on and turn-off of the maintenance device according to the service item, the method further comprises:
determining (S232) a deposit of using the maintenance device according to the maintenance device information;
initiating (S232) a deposit payment transaction request to the client; and
controlling (S233) the turn-on of the maintenance device after the client completes the deposit payment transaction.

3. The method according to claim 2, wherein the service item comprises a service duration, and said controlling the turn-on and turn-off of the maintenance device according to the service item comprises:
controlling (S233) the turn-on of the maintenance device after the client completes the deposit payment transaction; and
controlling (S204) the turn-off of the maintenance device when a duration of using the maintenance device reaches the service duration.

4. The method according to claim 2, wherein the service item comprises a service category, and controlling the turn-on and turn-off of the maintenance device according to the service item comprises:
controlling (S233) the turn-on of the maintenance device after the client completes the deposit payment transaction;
receiving (S204) a request for ending the usage sent by the client when a user completes the service corresponding to the service category; and
controlling (S204) the turn-off of the maintenance device according to the request for ending the usage.

5. The method according to any one of claims 1 to 4, further comprising:
generating (S205) a list of services and a list of charges according to the service item; and
initiating (S205) a payment transaction request to the client according to the list of services and the list of charges so as to cause the client to complete the payment transaction.

6. The method according to claim 5, wherein after controlling the turn-off of the maintenance device, the method further comprises:
acquiring (S261) current status information of the maintenance device;
determining (S261) whether the state of the maintenance device is normal according to the current state information;
generating (S262) a list of additional charges according to the current state information in the case that the state of the maintenance device is abnormal; and
initiating (S262) a transaction request for paying additional charge to the client according to the list of additional charges so as to cause the client to complete a transaction for paying additional charge.

7. A maintenance device management server for managing maintenance devices, the maintenance devices being configured for maintaining vehicles or electrical devices, with each maintenance device having uniquely determined maintenance device information that includes identification information, the identification information comprising a QR code or other device code and configured to be scanned by a client, wherein the client comprises a terminal device, the maintenance device management server comprising:
a memory (100) storing an executable computer program;
a processor (200) coupled to the memory (100);
wherein the processor (200) is configured to execute the computer program to implement: receiving (S101, S201) maintenance device information sent by the client, returning (S102, S202) a service rule for the maintenance device to the client according to the maintenance device information, wherein the service rule comprises a usage rule, and service categories or allowed service durations; receiving (S103, S231) a service request sent by the client, wherein the service request includes a service item selected from the service categories or the allowed service durations; and controlling (S104) turn-on and turn-off of the maintenance device according to the service item, wherein the maintenance device is turned on, and subsequently the maintenance device is turned off when a duration of using the maintenance device reaches a selected service duration or a request for ending the usage is received from the client.

8. The maintenance device management server according to claim 7, wherein the processor (200) is configured to execute the computer program stored in the memory (100) to implement: determining a deposit of using the maintenance device according to the maintenance device information; initiating a deposit payment transaction request to the client; and a step of controlling the turn-on of the maintenance device after the client completes the deposit payment transaction.

9. The maintenance device management server according to claim 8, wherein the service item comprises a service duration and the processor (200) is configured to execute the computer program stored in the memory (100) to implement: controlling the turn-on of the maintenance device after the client completes the deposit payment transaction; and a step of controlling the turn-off of the maintenance device when a duration of using the maintenance device reaches the service duration.

10. The maintenance device management server according to claim 8, wherein the service item comprises a service category and the processor (200) is configured to execute the computer program stored in said memory (100) to implement: controlling the turn-on of the maintenance device after the client completes the deposit payment transaction; receiving a request for ending the usage sent by the client when a user completes the service corresponding to the service category; and a step of controlling the turn-off of the maintenance device according to the request for ending the usage.

11. The maintenance device management server according to any one of claims 7 to 10, wherein the processor (200) is configured to execute the computer program stored in the memory (100) to implement: generating a list of services and a list of charges according to the service item; and a step of initiating a payment transaction request to the client according to the list of services and the list of charges so as to cause the client to complete the payment transaction.

12. The maintenance device management server according to claim 11, wherein the processor (200) is configured to execute the computer program stored in the memory (100) to implement: acquiring current status information of the maintenance device; determining whether the state of the maintenance device is normal according to the current state information; generating a list of additional charges according to the current state information in the case that the state of the maintenance device is abnormal; and a step of initiating a transaction request for paying additional charge to the client according to the list of additional charges so as to cause the client to complete a transaction for paying additional charge.

13. A computer readable storage medium, wherein the computer readable storage medium has a computer program stored therein, and when the computer program is executed by a processor (200) the steps of a maintenance device management method according to any one of claims 1 to 6 are performed.

## Patentansprüche

1. Verfahren, das durch einen Wartungsvorrichtungs-Verwaltungsserver zum Verwalten von Wartungsvorrichtungen ausgeführt wird, wobei die Wartungsvorrichtungen dafür ausgelegt sind, Fahrzeuge oder elektrische Vorrichtungen zu warten, wobei jede Wartungsvorrichtung eindeutig bestimmte Wartungsvorrichtungsinformationen aufweist, die Identifikationsinformationen umfassen, wobei die Identifikationsinformationen einen QR-Code oder einen anderen Vorrichtungscode umfassen und dafür ausgelegt sind, von einem Klienten gescannt zu werden, wobei der Klient eine Endgerätevorrichtung umfasst, wobei das Verfahren Folgendes umfasst:
Empfangen (S101, S201) von durch den Klienten gesendeten Wartungsvorrichtungsinformationen;
Zurückgeben (S102, S202) einer Serviceregel für die Wartungsvorrichtung an den Klienten gemäß den Wartungsvorrichtungsinformationen, wobei die Serviceregel eine Benutzungsregel und Servicekategorien oder erlaubte Servicedauern umfasst;
Empfangen (S103, S231) einer durch den Klienten gesendeten Serviceanforderung, wobei die Serviceanforderung einen aus den Servicekategorien oder den erlaubten Servicedauern ausgewählten Serviceposten umfasst; und
Steuern (S104) des Einschaltens und Ausschaltens der Wartungsvorrichtung gemäß den Serviceposten, wobei die Wartungsvorrichtung eingeschaltet wird und danach die Wartungsvorrichtung ausgeschaltet wird, wenn eine Dauer des Verwendens der Wartungsvorrichtung eine ausgewählte Servicedauer erreicht oder eine Anforderung zum Beenden der Benutzung vom Klienten empfangen wird.

2. Wartungsvorrichtungs-Verwaltungsverfahren nach Anspruch 1, wobei das Verfahren nach dem Empfangen (S231) einer durch den Klienten gesendeten Serviceanforderung und vor dem Steuern (S104) des Einschaltens und Ausschaltens der Wartungsvorrichtung gemäß dem Serviceposten ferner Folgendes umfasst:
Bestimmen (S232) einer Kaution des Verwendens der Wartungsvorrichtung gemäß den Wartungsvorrichtungsinformationen;
Einleiten (S232) einer Kautionsbezahlungs-Transaktionsanforderung an den Klienten; und
Steuern (S233) des Einschaltens der Wartungsvorrichtung, nachdem der Klient die Kautionsbezahlungstransaktion abschließt.

3. Verfahren nach Anspruch 2, wobei der Serviceposten eine Servicedauer umfasst und das Steuern des Einschaltens und Ausschaltens der Wartungsvorrichtung gemäß dem Serviceposten Folgendes umfasst:
Steuern (S233) des Einschaltens der Wartungsvorrichtung, nachdem der Klient die Kautionsbezahlungstransaktion abschließt; und
Steuern (S204) des Ausschaltens der Wartungsvorrichtung, wenn eine Dauer der Verwendung der Wartungsvorrichtung die Servicedauer erreicht.

4. Verfahren nach Anspruch 2, wobei der Serviceposten eine Servicekategorie umfasst und Steuern des Einschaltens und Ausschaltens der Wartungsvorrichtung gemäß dem Serviceposten Folgendes umfasst:
Steuern (S233) des Einschaltens der Wartungsvorrichtung, nachdem der Klient die Kautionsbezahlungstransaktion abschließt;
Empfangen (S204) einer Anforderung zur Beendigung der Benutzung, die durch den Klienten gesendet wird, wenn ein Benutzer den der Servicekategorie entsprechenden Service abschließt; und
Steuern (S204) des Ausschaltens der Wartungsvorrichtung gemäß der Anforderung zur Beendigung der Benutzung.

5. Verfahren nach einem der Ansprüche 1 bis 4, ferner umfassend:
Erzeugen (S205) einer Service-Liste und einer Liste von Gebühren gemäß dem Serviceposten; und
Einleiten (S205) einer Bezahlungstransaktionsanforderung an den Klienten gemäß der Service-Liste und der Liste von Gebühren, um so zu bewirken, dass der Klient die Bezahlungstransaktion abschließt.

6. Verfahren nach Anspruch 5, wobei das Verfahren ferner nach dem Steuern des Ausschaltens der Wartungsvorrichtung Folgendes umfasst:
Beschaffen (S261) von aktuellen Zustandsinformationen der Wartungsvorrichtung;
Bestimmen (S261), ob der Zustand der Wartungsvorrichtung normal ist, gemäß den aktuellen Zustandsinformationen;
Erzeugen (S262) einer Liste zusätzlicher Gebühren gemäß den aktuellen Zustandsinformationen, falls der Zustand der Wartungsvorrichtung abnorm ist; und
Einleiten (S262) einer Transaktionsanforderung zum Bezahlen einer zusätzlichen Gebühr an den Klienten gemäß der Liste zusätzlicher Gebühren, um so zu bewirken, dass der Klient eine Transaktion zum Bezahlen einer zusätzlichen Gebühr abschließt.

7. Wartungsvorrichtungs-Verwaltungsserver zum Verwalten von Wartungsvorrichtungen, wobei die Wartungsvorrichtungen dafür ausgelegt sind, Fahrzeuge oder elektrische Vorrichtungen zu warten, wobei jede Wartungsvorrichtung eindeutig bestimmte Wartungsvorrichtungsinformationen aufweist, die Identifikationsinformationen umfassen, wobei die Identifikationsinformationen einen QR-Code oder einen andere Vorrichtungscode umfassen und dafür ausgelegt sind, von einem Klienten gescannt zu werden, wobei der Klient eine Endgerätevorrichtung umfasst, wobei der Wartungsvorrichtungs-Verwaltungsserver Folgendes umfasst:
einen Speicher (100), der ein ausführbares Computerprogramm speichert;
einen mit dem Speicher (100) gekoppelten Prozessor (200) ;
wobei der Prozessor (200) dafür ausgelegt ist, das Computerprogramm auszuführen, um Folgendes zu implementieren:
Empfangen (S101, S201) von durch den Klienten gesendeten Wartungsvorrichtungsinformationen;
Zurückgeben (S102, S202) einer Serviceregel für die Wartungsvorrichtung an den Klienten gemäß den Wartungsvorrichtungsinformationen, wobei die Serviceregel eine Benutzungsregel und Servicekategorien oder erlaubte Servicedauern umfasst;
Empfangen (S103, S231) einer durch den Klienten gesendeten Serviceanforderung, wobei die Serviceanforderung einen aus den Servicekategorien oder den erlaubten Servicedauern ausgewählten Serviceposten umfasst; und
Steuern (S104) des Einschaltens und Ausschaltens der Wartungsvorrichtung gemäß dem Serviceposten, wobei die Wartungsvorrichtung eingeschaltet wird und danach die Wartungsvorrichtung ausgeschaltet wird, wenn eine Dauer des Verwendens der Wartungsvorrichtung eine ausgewählte Servicedauer erreicht oder eine Anforderung zum Beenden der Benutzung vom Klienten empfangen wird.

8. Wartungsvorrichtungs-Verwaltungsserver nach Anspruch 7, wobei der Prozessor (200) dafür ausgelegt ist, das in dem Speicher (100) gespeicherte Computerprogramm auszuführen, um Folgendes zu implementieren:
Bestimmen einer Kaution des Verwendens der Wartungsvorrichtung gemäß den Wartungsvorrichtungsinformationen;
Einleiten einer Kautionsbezahlungs-Transaktionsanforderung an den Klienten; und
einen Schritt des Steuerns des Einschaltens der Wartungsvorrichtung, nachdem der Klient die Kautionsbezahlungstransaktion abschließt.

9. Wartungsvorrichtungs-Verwaltungsserver nach Anspruch 8, wobei der Serviceposten eine Servicedauer umfasst und der Prozessor (200) dafür ausgelegt ist, das in dem Speicher (100) gespeicherte Computerprogramm auszuführen, um Folgendes zu implementieren:
Steuern des Einschaltens der Wartungsvorrichtung, nachdem der Klient die Kautionsbezahlungstransaktion abschließt; und
einen Schritt des Steuerns des Ausschaltens der Wartungsvorrichtung, wenn eine Dauer der Verwendung der Wartungsvorrichtung die Servicedauer erreicht.

10. Wartungsvorrichtungs-Verwaltungsserver nach Anspruch 8, wobei der Serviceposten eine Servicekategorie umfasst und der Prozessor (200) dafür ausgelegt ist, das in dem Speicher (100) gespeicherte Computerprogramm auszuführen, um Folgendes zu implementieren:
Steuern des Einschaltens der Wartungsvorrichtung, nachdem der Klient die Kautionsbezahlungstransaktion abschließt; Empfangen einer Anforderung zur Beendigung der Benutzung, die durch den Klienten gesendet wird, wenn ein Benutzer den der Servicekategorie entsprechenden Service abschließt; und einen Schritt des Steuerns des Ausschaltens der Wartungsvorrichtung gemäß der Anforderung zur Beendigung der Benutzung.

11. Wartungsvorrichtungs-Verwaltungsserver nach einem der Ansprüche 7 bis 10, wobei der Prozessor (200) dafür ausgelegt ist, das in dem Speicher (100) gespeicherte Computerprogramm auszuführen, um Folgendes zu implementieren: Erzeugen einer Service-Liste und einer Liste von Gebühren gemäß dem Serviceposten; und einen Schritt des Einleitens einer Bezahlungstransaktionsanforderung an den Klienten gemäß der Service-Liste und der Liste von Gebühren, um so zu bewirken, dass der Klient die Bezahlungstransaktion abschließt.

12. Wartungsvorrichtungs-Verwaltungsserver nach Anspruch 11, wobei der Prozessor (200) dafür ausgelegt ist, das in dem Speicher (100) gespeicherte Computerprogramm auszuführen, um Folgendes zu implementieren: Beschaffen von aktuellen Zustandsinformationen der Wartungsvorrichtung; Bestimmen, ob der Zustand der Wartungsvorrichtung normal ist, gemäß den aktuellen Zustandsinformationen; Erzeugen einer Liste zusätzlicher Gebühren gemäß den aktuellen Zustandsinformationen, falls der Zustand der Wartungsvorrichtung abnorm ist; und einen Schritt des Einleitens einer Transaktionsanforderung zum Bezahlen einer zusätzlichen Gebühr an den Klienten gemäß der Liste zusätzlicher Gebühren, um so zu bewirken, dass der Klient eine Transaktion zum Bezahlen einer zusätzlichen Gebühr abschließt.

13. Computerlesbares Speicherungsmedium, wobei das computerlesbare Speicherungsmedium ein darin gespeichertes Computerprogramm aufweist und wenn das Computerprogramm durch einen Prozessor (200) ausgeführt wird, die Schritte eines Wartungsvorrichtungs-Verwaltungsverfahrens nach einem der Ansprüche 1 bis 6 ausgeführt werden.

## Revendications

1. Procédé effectué par un serveur de gestion de dispositifs d'entretien destiné à gérer des dispositifs d'entretien, les dispositifs d'entretien étant configurés pour effectuer l'entretien de véhicules ou de dispositifs électriques, chaque dispositif d'entretien ayant des informations de dispositif d'entretien déterminées de façon unique qui comportent des informations d'identification, les informations d'identification comprenant un code QR ou un autre code de dispositif et étant configurées pour être lues par un client, le client comprenant un dispositif terminal, le procédé comprenant :
la réception (S101, S201) d'informations de dispositif d'entretien envoyées par le client ;
le renvoi (S102, S202) au client d'une règle de service pour le dispositif d'entretien en fonction des informations de dispositif d'entretien, la règle de service comprenant une règle d'utilisation, et des catégories de service ou des durées de service autorisées ;
la réception (S103, S231) d'une requête de service envoyée par le client, la requête de service comportant un élément de service sélectionné parmi les catégories de service ou les durées de service autorisées ; et
la commande (S104) de l'activation et de la désactivation du dispositif d'entretien en fonction de l'élément de service, le dispositif d'entretien étant activé, puis le dispositif d'entretien étant désactivé quand une durée d'utilisation du dispositif d'entretien atteint une durée de service sélectionnée ou une requête pour mettre un terme à l'utilisation est reçue de la part du client.

2. Procédé de gestion de dispositifs d'entretien selon la revendication 1, le procédé comprenant en outre, après la réception (S231) d'une requête de service envoyée par le client et avant la commande (S104) de l'activation et de la désactivation du dispositif d'entretien en fonction de l'élément de service :
la détermination (S232) d'une caution d'utilisation du dispositif d'entretien en fonction des informations de dispositif d'entretien ;
l'initiation (S232) d'une requête de transaction de paiement de caution à destination du client ; et
la commande (S233) de l'activation du dispositif d'entretien après que le client a finalisé la transaction de paiement de caution.

3. Procédé selon la revendication 2, dans lequel l'élément de service comprend une durée de service, et ladite commande de l'activation et de la désactivation du dispositif d'entretien en fonction de l'élément de service comprend :
la commande (S233) de l'activation du dispositif d'entretien après que le client a finalisé la transaction de paiement de caution ; et
la commande (S204) de la désactivation du dispositif d'entretien quand une durée d'utilisation du dispositif d'entretien atteint la durée de service.

4. Procédé selon la revendication 2, dans lequel l'élément de service comprend une catégorie de service, et la commande de l'activation et de la désactivation du dispositif d'entretien en fonction de l'élément de service comprend :
la commande (S233) de l'activation du dispositif d'entretien après que le client a finalisé la transaction de paiement de caution ;
la réception (S204) d'une requête pour mettre un terme à l'utilisation envoyée par le client quand un utilisateur termine le service correspondant à la catégorie de service ; et
la commande (S204) de la désactivation du dispositif d'entretien en fonction de la requête pour mettre un terme à l'utilisation.

5. Procédé selon l'une quelconque des revendications 1 à 4, comprenant en outre :
la génération (S205) d'une liste de services et d'une liste de frais en fonction de l'élément de service ; et
l'initiation (S205) d'une requête de transaction de paiement à destination du client en fonction de la liste de services et de la liste de frais de manière à ce que le client finalise la transaction de paiement.

6. Procédé selon la revendication 5, le procédé comprenant en outre, après la commande de la désactivation du dispositif d'entretien :
l'acquisition (S261) d'informations d'état en cours du dispositif d'entretien ;
la détermination (S261) que l'état du dispositif d'entretien est normal ou non en fonction des informations d'état en cours ;
la génération (S262) d'une liste de frais supplémentaires en fonction des informations d'état en cours dans le cas où l'état du dispositif d'entretien est anormal ; et
l'initiation (S262) d'une requête de transaction pour payer des frais supplémentaires à destination du client en fonction de la liste de frais supplémentaires de manière à ce que le client finalise une transaction pour payer les frais supplémentaires.

7. Serveur de gestion de dispositifs d'entretien destiné à gérer des dispositifs d'entretien, les dispositifs d'entretien étant configurés pour effectuer l'entretien de véhicules ou de dispositifs électriques, chaque dispositif d'entretien ayant des informations de dispositif d'entretien déterminées de façon unique qui comportent des informations d'identification, les informations d'identification comprenant un code QR ou un autre code de dispositif et étant configurées pour être lues par un client, le client comprenant un dispositif terminal, le serveur de gestion de dispositifs d'entretien comprenant :
une mémoire (100) stockant un programme informatique exécutable ;
un processeur (200) couplé à la mémoire (100) ;
dans lequel le processeur (200) est configuré pour exécuter le programme informatique pour mettre en œuvre : la réception (S101, S201) d'informations de dispositif d'entretien envoyées par le client ; le renvoi (S102, S202) au client d'une règle de service pour le dispositif d'entretien en fonction des informations de dispositif d'entretien, la règle de service comprenant une règle d'utilisation, et des catégories de service ou des durées de service autorisées ; la réception (S103, S231) d'une requête de service envoyée par le client, la requête de service comportant un élément de service sélectionné parmi les catégories de service ou les durées de service autorisées ; et la commande (S104) de l'activation et de la désactivation du dispositif d'entretien en fonction de l'élément de service, le dispositif d'entretien étant activé, puis le dispositif d'entretien étant désactivé quand une durée d'utilisation du dispositif d'entretien atteint une durée de service sélectionnée ou une requête pour mettre un terme à l'utilisation est reçue de la part du client.

8. Serveur de gestion de dispositifs d'entretien selon la revendication 7, dans lequel le processeur (200) est configuré pour exécuter le programme informatique stocké dans la mémoire (100) pour mettre en œuvre : la détermination d'une caution d'utilisation du dispositif d'entretien en fonction des informations de dispositif d'entretien ; l'initiation d'une requête de transaction de paiement de caution à destination du client ; et une étape de commande de l'activation du dispositif d'entretien après que le client a finalisé la transaction de paiement de caution.

9. Serveur de gestion de dispositifs d'entretien selon la revendication 8, dans lequel l'élément de service comprend une durée de service et le processeur (200) est configuré pour exécuter le programme informatique stocké dans la mémoire (100) pour mettre en œuvre : la commande de l'activation du dispositif d'entretien après que le client a finalisé la transaction de paiement de caution ; et une étape de commande de la désactivation du dispositif d'entretien quand une durée d'utilisation du dispositif d'entretien atteint la durée de service.

10. Serveur de gestion de dispositifs d'entretien selon la revendication 8, dans lequel l'élément de service comprend une catégorie de service et le processeur (200) est configuré pour exécuter le programme informatique stocké dans la mémoire (100) pour mettre en œuvre : la commande de l'activation du dispositif d'entretien après que le client a finalisé la transaction de paiement de caution ; la réception d'une requête pour mettre un terme à l'utilisation envoyée par le client quand un utilisateur termine le service correspondant à la catégorie de service ; et une étape de commande de la désactivation du dispositif d'entretien en fonction de la requête pour mettre un terme à l'utilisation.

11. Serveur de gestion de dispositifs d'entretien selon l'une quelconque des revendications 7 à 10, dans lequel le processeur (200) est configuré pour exécuter le programme informatique stocké dans la mémoire (100) pour mettre en œuvre : la génération d'une liste de services et d'une liste de frais en fonction de l'élément de service ; et une étape d'initiation d'une requête de transaction de paiement à destination du client en fonction de la liste de services et de la liste de frais de manière à ce que le client finalise la transaction de paiement.

12. Serveur de gestion de dispositifs d'entretien selon la revendication 11, dans lequel le processeur (200) est configuré pour exécuter le programme informatique stocké dans la mémoire (100) pour mettre en œuvre : l'acquisition d'informations d'état en cours du dispositif d'entretien ; la détermination que l'état du dispositif d'entretien est normal ou non en fonction des informations d'état en cours ; la génération d'une liste de frais supplémentaires en fonction des informations d'état en cours dans le cas où l'état du dispositif d'entretien est anormal ; et une étape d'initiation d'une requête de transaction pour payer des frais supplémentaires à destination du client en fonction de la liste de frais supplémentaires de manière à ce que le client finalise une transaction pour payer les frais supplémentaires.

13. Support de stockage lisible par ordinateur, le support de stockage lisible par ordinateur ayant un programme informatique stocké à l'intérieur, et dans lequel, quand le programme informatique est exécuté par un processeur (200), les étapes d'un procédé de gestion de dispositifs d'entretien selon l'une quelconque des revendications 1 à 6 sont effectuées.
